# EUROPEAN PATENT APPLICATION

(11) **EP 0 835 714 A1**
(43) Date of publication of application: **15.04.1998**
(21) Application number: 96202803.1
(22) Date of filing: 09.10.1996
(51) Int. Cl.: B23K 26/06

(54) **Laser focusing unit for laser beam devices**

(71) Applicant: LVD Company NV, 8630 Gullegem-Wevelgem (BE)
(72) Inventor: Serruys, Wim, 8560 Moorsele (BE)
(74) Representative: Leherte, Georges M.L.M., Dr.

(57) **Abstract**

The invention provides a laser focussing unit, comprising focussing and mirror means for the laser beam, in which a swivelling flat mirror is provided between the focussing lens for the laser beam and the focus spot of the laser beam, with the swivelling of the flat mirror preferably taking place around the axis of the laser beam.
The focussing unit preferably comprises at least one focussing lens and two mirrors, preferably both flat and foreseen in a swivelling manner around the axis of the laser beam.
One mirror may be positionned before the lens and the other between the lens and the focus spot of the laser beam, or both mirrors may be positionned between the lens and the focus spot of the laser beam, or two lens positions may be foreseen, one before the two mirrors and one between the two mirrors, so that one mirror is positionned between the first lens position and the second lens position, and the other mirror is positionned between the second lens position and the focus spot of the laser beam.

## Description

This invention relates to equipment for laser beam devices, in particular to focussing units for the laser beam of such devices.

Laser beam devices for cutting and/or welding purposes are nowadays of general use in many application fields. General background information on the subject may for instance be found in the annual publications of INDUSTRIAL LASER HANDBOOK, Annual Review of Laser Processing, Pennwell Publishing Cy., David Belforte ed. In order to allow the proper focussing of the laser beam on a chosen position of an object to be welded or cut, there has been developped equipment using a fixed position laser source in which the laser beam is deflected by one or more mirrors and subsequently focussed by means of a lens or a parabolic mirror.

Focussing by means of a mirror has the advantage that the focus is very sharply defined so that lens focussing units are particularly suitable for laserbeam cutting.
For laserbeam welding lens focussing is however less appropriate because the splashes which occur during welding are damageable to the sophisticated lenses required for laser beams. For laserbeam welding focussing is accordingly performed by means of a parabolic metal mirror, in particular a copper mirror.

In practice laser beam devices are therefore often constructed to be equiped alternatively with two distinct types of laser focussing units ("laserhead"), one for cutting (with a lens) and one for welding (with a parabollic metal mirror).

It is the object of the present invention to Provide a single laser focussing unit which combines the advantages of both types of focussing units and which is appropriate for both cutting and welding, and which in addition can do so under substantially any angle in space.

To achieve this object the invention provides a laser focussing unit, comprising focussing and mirror means for the laser beam, in which a swivelling flat mirror is provided between the focussing lens for the laser beam and the focus spot of the laser beam.

The swivelling of the flat mirror preferably takes place around the axis of the laser beam. The plane of said flat mirror is most suitably positionned in a sharp angle (appropriately 45°) with respect to the axis of the laser beam, whereas the flat mirror is most preferabbly arranged on a mirror support which can be rotated (preferably over a full 360°) around said axis of the laser beam.

According to a further feature of the invention said laser focussing unit preferably comprises at least one focussing lens and two mirrors. Said two mirrors are preferably both flat mirrors and may preferably be foreseen in a swivelling manner around the axis of the laser beam.

The second mirror is preferably arranged on a mirror support, in a sharp angle (appropriately 45°) with respect to the axis of the laser beam (as reflected from the first mirror), which mirror support can be rotated (preferably over a full 360°) around the axis of the laser beam reflected from the first mirror.
In this most preferred embodiment with mirrors each time arranged at 45° with respect to direction of the laser beam, the two mirror supports in fact most suitably rotate around two axes which are perpendicular to each other. By swivelling the two mirror supports around their axes the laser beam can thus be directed in any direction.

In a preferred embodiment of a laser focussing unit comprising two mirrors, according to the invention, one mirror is positionned before said lens and the other between said lens and the focus spot of the laser beam.
According to another preferred embodiment of said laser focussing unit comprising two mirrors, both said mirrors are positionned between said lens and the focus spot of the laser beam.

In the most preferred embodiment of the invention, two lens positions are foreseen, one before the two mirrors and one between the two mirrors, so that one mirror is positionned between the first lens position and the second lens position, and the other mirror is positionned between the second lens position and the focus spot of the laser beam.
This preferred embodiment is furthermore most suitably provided in such way that a lens can, at will, be provided at either one or at both lens positions.
Thus one can, at will, benefit from the advantages of a short focal lens laser focussing unit (i.e. very narrow focus), by providing a short focal lens at the lens position between the two mirrors, or have the advantage of a long focal lens laser focussing unit (i.e. broader focus) by providing a long focal lens at the lens position before the two mirrors, or alternatively one can even use two lenses to optimise the desired focal length.

It is emphasized that this high flexibility of the focussing device according to the invention, is achieved, thanks to the specific arrangement according to the invention, without any loss in the compactness of the unit or any increase in the distance required between the equipment and the object/workpiece to be cut or welded. On the contrary, and this is quite surprising, the arrangement according to the invention allows a combination of the advantages of the distinct technologies (cutting or welding equipment) and an increased flexibility with at the same time a more compact unit and more accessibility to the space between the focussing unit and the workpiece, without increase in the distance between the laser source and the morkpiece.

The invention will be further explained herebelow with reference to the attached drawings schematically representing various embodiments of the invention. It should be observed that the specific features of these embodiments are only described as preferred examples of what is intended within the above general disclosure of the invention and should by no means be interpretted as limiting the scope of the invention as such and as set forth in the claims.

In the attached drawings :
Figure 1 represents shematically a first embodiment of the focussing unit according to the invention, in which one mirror is positionned before the lens and the other between the lens and the focus spot of the laser beam.
Figure 2 represents shematically a second embodiment of the focussing unit according to the invention, in which both the mirrors are positionned between the lens and the focus spot of the laser beam.
Figure 3 is a sectionnal view of a focussing unit according to the invention, corresponding to the embodiment according to shematic figure 1 and 2.

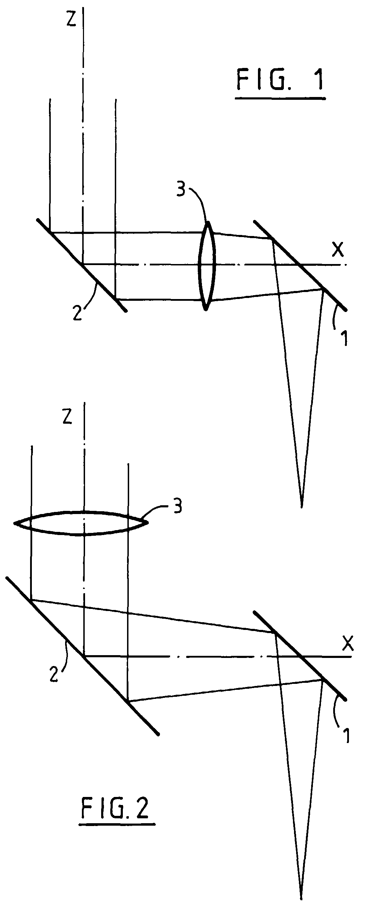

In these figures 1 - 3 the flat mirrors are represented by reference numerals (1) and (2) and the lenses are designated by reference numerals (3) and (4).

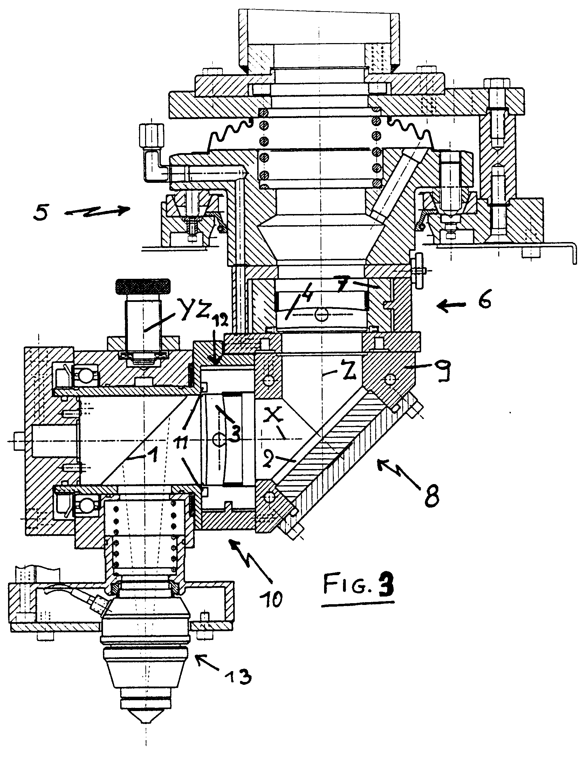

In figure 3 the outlet part of a high power laser beam delivery unit is designated as a whole with reference numeral (5). A first lens position (6) is provided at the extremity of this laser beam delivery outlet (5). A first lens support (7) bearing a first lens (4) can be positionned at this first lens position (6)
A first mirror support, designated as a whole with reference numeral (8), is arranged at the extremity of the laser beam delivery outlet (5), beyond the first lens position (6), in a swivelling manner around the axis (Z) of the laser beam issuing from the laser beam delivery outlet. The mirror support (8), bearing a first mirror (2), in an angle of 45° with respect to axis (Z), is connected to the laser beam delivery outlet (5) through a roller-bearing unit (9).
A second lens position (12) for a second lens (3) is provided on the first mirror support unit (8).
A unit, designated as a whole with reference numeral (10), is furthermore arranged onto the first mirror support unit (8) and is connected to the second lens unit (12) through a roller-bearing unit (11). The unit (10) bears a second mirror (1), positionned in an angle of 45° with respect to axis (X) of the laser beam reflected from mirror (2).
The unit (10) as a whole is arranged in a swivelling manner around axis (X) thanks to roller-bearings (11).
The second mirror unit (10) is further equipped with a laser beam nozzle indicated by reference numeral (13). It may further also comprise gas ejection means, as required for laser cutting, and means for projecting welding-agents as required for laser welding, between the exit of the laser beam from unit (10) and the actual nozzle (13); such means are known per se in the art, and - although partly represented on figure 4 - will not be explained in greater detail in this specification.

When using the device according to the invention as shown in figure 3, one introduces a lens either at position (6) or at position (12), depending on the actual conditions desired in respect of focus sharpness, focal length, distance between the nozzle and the workpiece, etc. The laser beam arriving allong axis (Z) will be either not, or partly, or entirely focussed at lens position (6) and will be reflected along axis (X) on mirror (2). By rotating the swivelling unit (8) around axis (Z) the laser beam comming out of said unit (8) can be made to describe a complete circle in the horizontal plane.
The beam falls however on mirror (1) and is therefore reflected according to an axis (YZ) perpendicular to axis (X). By rotating the swivelling unit (10) around axis (X) - which axis (X) can itself be swivelled for 360° around axis (Z) - the laser beam comming out of the nozzle (13) can be made to describe a complete circle in a vertcal plane. By combining the swivelling movements of unit (8) and of unit (10) the laser beam can therefore be directed into any desired direction.

## Claims

1. Laser focussing unit for laser beam devices, comprising focussing and mirror means for the laser beam to produce a focussed spot which can be moved, characterised in that the unit comprises a swivelling flat mirror between the focussing lens for the laser beam and the focus spot of the laser beam.

2. Laser focussing unit according to claim 1, characterised in that it comprises at least one focussing lens and two mirrors.

3. Laser focussing unit according to claim 2, characterised in that one mirror is positionned before said lens and the other is positionned between said lens and the focus spot of the laser beam.

4. Laser focussing unit according to claim 2, characterised in that both said mirrors are positionned between said lens and the focus spot of the laser beam.

5. Laser focussing unit according to claim 3 and 4, characterised in that it comprises two lens positions, one before the two mirrors and one between the two mirrors.

6. Laser focussing unit according to any one of claims 2 to 5, characterised in that both said mirrors are flat mirrors.

7. Laser focussing unit according to any one of claims 2 to 6, characterised in that both said mirrors are swivelling around the axis of the laser beam

8. Laser focussing unit according to any one of claims 5 to 7, characterised in that a short focal lens is provided at the lens position between the two mirrors.

9. Laser focussing unit according to any one of claims 5 to 7, characterised in that a long focal lens is provided at the lens position before the two mirrors.
